# EUROPÄISCHE PATENTSCHRIFT

(11) **EP 0 431 245 B1**
(45) Veröffentlichungstag und Bekanntmachung des Hinweises auf die Patenterteilung: **20.07.1994**
(21) Anmeldenummer: 90110787.0
(22) Anmeldetag: 07.06.1990
(51) Int. Cl.: B60S 1/08

(54) **Einrichtung zur Steuerung eines Scheibenwischers**
Windshield wiper control arrangement
Installation de commande d'un essuie-glace

(30) Priorität: 02.12.1989 DE 3939938
(43) Veröffentlichungstag der Anmeldung: 12.06.1991
(73) Patentinhaber: VDO Adolf Schindling AG, D-60487 Frankfurt (DE)
(72) Erfinder: Wallrafen, Werner, D-6231 Sulzbach/Ts. (DE)
(74) Vertreter: Klein, Thomas, Dipl.-Ing. (FH)

(56) Entgegenhaltungen:
- EP-A- 0 184 310
- WO-A-89/06202

## Beschreibung

Die Erfindung betrifft eine Einrichtung zur Steuerung eines Scheibenwischers, insbesondere an einem Kraftfahrzeug.

Eine Einrichtung der eingangs genannten Art geht aus der WO-A-89/06 202 hervor. Hierin wird bei Passieren eines Feuchtigkeitssensors durch den Scheibenwischer das Signal des Sensors als Referenzwert für die gereinigte Scheibe abgespeichert. Überschreitet das Sensorsignal anschließend den Referenzwert um eine vorgegebene Schwelle, so wird ein Wischvorgang ausgelöst. Ein zusätzlicher, manuell zu betätigender Schalter dient zum Einschalten des Wischers.

Ferner sind Einrichtungen zur Steuerung von Scheibenwischern bekanntgeworden, bei welchen beim Überschreiten einer vorgegebenen Schwelle der Regenbenetzung auf der Frontscheibe der Scheibenwischermotor selbsttätig anläuft. Zum Erkennen der Benetzung auf der Frontscheibe sind verschiedene Sensoren bekanntgeworden. Ferner ist bei den bekannten Einrichtungen der Schwellwert fest vorgegeben oder in Stufen veränderbar.

Der jeweils verwendete Sensor liefert jedoch in Zusammenwirkung mit einer Schwellwertschaltung ein Signal, das nur ungenügend den jeweiligen Grad der Beeinträchtigung der Sicht wiedergibt. Diese ist von vielen, zum Teil subjektiven Bedingungen abhängig. So spielen beispielsweise das individuelle Sehvermögen und die übrigen Sichtverhältnisse eine entscheidende Rolle. Regentropfen wirken bei Dunkelheit mit Blendung durch entgegenkommende Fahrzeuge sehr viel störender als am Tage. Ferner wird durch die Größe der Regentropfen, durch die Oberflächenspannung und durch den Verschmutzungsgrad der Frontscheibe die Sicht in unterschiedlichem Maße beeinflußt. Schließlich beeinträchtigen sensorbedingte Veränderungen die Bedeutung des Sensorsignals als Gradmesser für die Sicht. Solche Veränderungen sind beispielsweise Temperaturabhängigkeiten und Alterungsvorgänge, herstellungsbedingte Toleranzen und die Leitfähigkeit des Regens bei kapazitiven und resistiven Sensorsystemen.

Aufgabe der vorliegenden Erfindung ist es, eine an sich feuchtigkeitsabhängige Steuerung des Scheibenwischers an die jeweiligen Sichtbedingungen anzupassen. Die Aufgabe der Erfindung ist durch die Merkmale des Anspruchs 1 gelöst. Dazu ist erfindungsgemäß vorgesehen, daß der Scheibenwischer eingeschaltet wird, wenn ein Sensor eine Feuchtigkeit oberhalb eines vorgegebenen Schwellwertes anzeigt; der Scheibenwischer ist ferner über einen manuell betätigbaren Bedienschalter ein- und ausschaltbar. Bei Betätigung des Bedienschalters wird der Schwellwert herabgesetzt.

Durch die erfindungsgemäßen Maßnahmen wird eine Anpassung der Steuerung des Scheibenwischers an die vom Fahrer des Fahrzeugs empfundenen Sichtbedingungen in einfacher Weise vorgenommen. Dabei wird die Aufmerksamkeit des Fahrers nur gering in Anspruch genommen. Zu einer Herabsetzung der Empfindlichkeit beim Einschalten des Scheibenwischers ist vom Fahrer lediglich derjenige Handgriff erforderlich, der ihm bei Sichtbehinderungen durch eine benetzte Frontscheibe ohnehin geläufig ist.

Jedes vorzeitige manuelle Einschalten hat zur Folge, daß die Ansprechempfindlichkeit höher wird. Eine Verminderung der Empfindlichkeit kann jedoch dadurch erfolgen, daß der Scheibenwischer solange ausgeschaltet wird, bis die Regenbenetzung ein Wiedereinschalten erfordert.

Gemäß einer Weiterbildung der Erfindung ist vorgesehen, daß der Schwellwert bei Betätigung des Schalters etwa auf die zu diesem Zeitpunkt vom Sensor abgegebene Ausgangsspannung herabgesetzt wird. Eine andere Weiterbildung der Erfindung besteht darin, daß der Schwellwert nach dem Einschalten der Einrichtung einen Wert annimmt, der gleich oder etwas niedriger als die zum Zeitpunkt des Einschaltens vom Sensor abgegebene Ausgangsspannung ist.

Durch diese Weiterbildungen wird das Wiedereinschalten des Scheibenwischers bei einem Benetzungsgrad sichergestellt, bei welchem der Fahrer zuvor das Einschalten des Scheibenwischers für erforderlich gehalten hat.

Gemäß einer anderen Weiterbildung ist vorgesehen, daß der Schwellwert beim Einschalten der Einrichtung nach längerer Zeit den zuletzt vorhandenen gespeicherten Schwellwert annimmt.

Schließlich besteht eine andere Weiterbildung darin, daß der Schwellwert beim Wiedereinschalten der Einrichtung innerhalb kurzer Zeit einen Wert annimmt, der etwa auf der zu diesem Zeitpunkt vom Sensor abgegebenen Ausgangsspannung liegt.

Eine vorteilhafte Ausführungsform der Erfindung besteht darin, daß ein Mikrocomputer mit einem Programm vorgesehen ist, das regelmäßig sowohl den Sensor als auch den Bedienschalter abfragt, bei Überschreiten des Schwellwertes und bei Betätigung des Bedienschalters den Scheibenwischer ein- bzw. ausschaltet und bei Betätigung des Bedienschalters den Schwellwert in Abhängigkeit vom aktuellen Sensorsignal anpaßt.

Die Erfindung läßt zahlreiche Ausführungsformen zu. Eine davon ist schematisch in der Zeichnung anhand mehrerer Figuren dargestellt und nachfolgend beschrieben. Es zeigt:
- Fig. 1: ein Blockschaltbild einer erfindungsgemäßen Einrichtung und
- Fig. 2: ein Flußdiagramm eines für den Mikrocomputer in der Einrichtung nach Fig. 1 vorgesehenen Programms.

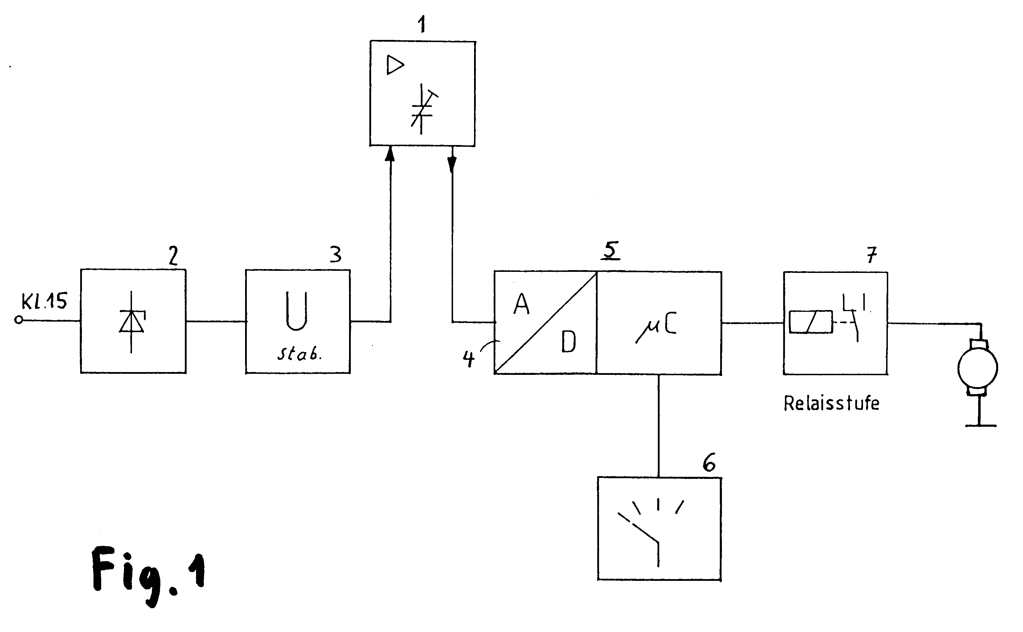

Bei der in Fig. 1 dargestellten Einrichtung wird der Grad der Benetzung der Frontscheibe mit Hilfe eines kapazitiven, Feuchtigkeit erfassenden Sensors 1 ermittelt, dem über die Klemme 15 des Bordnetzes, über ein Störspannungsfilter 2 und über eine Stabilisierungsschaltung 3 Betriebsspannung zugeführt wird. Kapazitive Feuchtesensoren sind an sich bekannt und brauchen zum Verständnis der vorliegenden Erfindung im einzelnen nicht näher erläutert zu werden. Dem Sensor 1 ist ein Verstärker zugeordnet, so daß die Ausgangsspannung des Sensors unmittelbar einem Analog/Digital-Wandler 4 eines sogenannten Einchip-Mikrocomputers 5 zugeführt wird. Der Mikrocomputer 5 ist mit einem Bedienschalter 6 verbunden, der vorzugsweise als Lenkstockschalter ausgeführt ist und rastende Stellungen für Dauerbetrieb und automatischen Betrieb sowie eine Erststellung für einen einmaligen Wischvorgang aufweist. Über eine Relais-Stufe 7 ist der Motor 8 eines im übrigen nicht dargestellten Scheibenwischers an einen Ausgang des Mikrocomputers 5 angeschlossen.

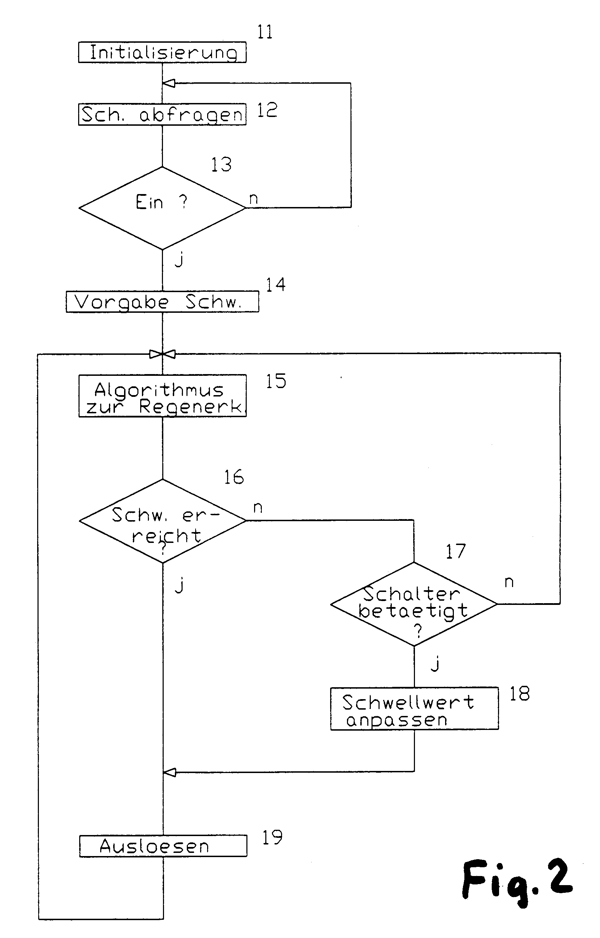

Das in Fig. 2 dargestellte Programm wird bei 11 initialisiert und fragt bei 12 die Schalterstellung ab. Danach erfolgt eine Verzweigung 13 in Abhängigkeit davon, ob sich der Schalter in der Ein-Stellung (automatischer Betrieb) befindet. Solange dieses nicht der Fall ist, werden die Programmteile 12 und 13 in Form einer Schleife durchlaufen. Sobald ein Einschalten erfolgt, findet bei 14 die Vorgabe des Schwellwertes statt. Dieses kann beispielsweise dadurch erfolgen, daß der Schwellwert aus einem nichtflüchtigen Speicher ausgelesen wird. Es ist jedoch auch möglich, die jeweils im Moment des Einschaltens vorhandene Ausgangsspannung des Sensors als Schwellwert zu verwenden - gegebenenfalls einen Wert der etwas unterhalb der Ausgangsspannung liegt.

Bei 15 wird der Schwellwert mit der tatsächlichen Ausgangsspannung verglichen. In Abhängigkeit von dem Vergleichsergebnis erfolgt eine Verzweigung 16. Ist der Schwellwert nicht erreicht, wird bei 17 abgefragt, ob inzwischen der Schalter betätigt wurde. Ist dieses nicht der Fall, wird der Programmteil 15 wiederholt. Ist jedoch der Schalter inzwischen betätigt worden, wird im Programmteil 18 der Schwellwert in Abhängigkeit von dem vorliegenden Ausgangssignal des Sensors angepaßt. Daraufhin erfolgt bei 19 das Auslösen des Scheibenwischers. Wird bei 15 festgestellt, daß das Ausgangssignal des Sensors bereits größer als der Schwellwert ist, wird nach der Verzweigung 16 direkt der Scheibenwischermotor ausgelöst (19), ohne daß eine Abfrage des Schalters erfolgt.

Zum Unterscheiden, ob ein Aus- und Wiedereinschalten wegen einer Änderung des Schwellwertes oder deshalb vorgenommen wird, weil es eine Zeitlang nicht regnet, kann ein Zeitglied vorgesehen sein. Wird die Einrichtung nur kurz ausgeschaltet bzw. der Schalter nur kurz in die Aus-Stellung gebracht, wird als Schwellwert ein Wert vorgegeben, der gleich oder dicht unterhalb des gerade vorhandenen Ausgangssignals des Sensors liegt. Bleibt jedoch die Einrichtung längere Zeit ausgeschaltet, wird beim Wiedereinschalten ein in einem Speicher abgelegter Schwellwert vorgegeben.

## Patentansprüche

1. Einrichtung zur Steuerung eines Scheibenwischers, insbesondere an einem Kraftfahrzeug, mit einem Feuchtigkeit auf einer Scheibe anzeigenden Sensor (1) zur selbsttätigen Steuerung des Scheibenwischers und einem zusätzlichen manuell betätigbaren Schalter (6) zum Einschalten des Scheibenwischers, dadurch gekennzeichnet, daß der Scheibenwischer selbsttätig eingeschaltet wird, wenn der Sensor (1) eine Feuchtigkeit oberhalb eines vorgegebenen Schwellwertes anzeigt, und daß bei Betätigung des Schalters (6) der Schwellwert herabgesetzt wird.

2. Einrichtung nach Anspruch 1, dadurch gekennzeichnet, daß der Schwellwert bei Betätigung des Schalters (6) etwa auf die zu diesem Zeitpunkt vom Sensor (1) abgegebene Ausgangsspannung herabgesetzt wird.

3. Einrichtung nach Anspruch 1, dadurch gekennzeichnet, daß der Schwellwert nach dem Einschalten der Einrichtung einen Wert annimmt, der gleich oder etwas niedriger als die zum Zeitpunkt des Einschaltens vom Sensor (1) abgegebene Ausgangsspannung ist.

4. Einrichtung nach einem der vorhergehenden Ansprüche, dadurch gekennzeichnet, daß der Schwellwert beim Einschalten der Einrichtung nach längerer Zeit den zuletzt vorhandenen gespeicherten Schwellwert annimmt.

5. Einrichtung nach einem der Ansprüche 1, 2 oder 3, dadurch gekennzeichnet, daß der Schwellwert beim Wiedereinschalten der Einrichtung innerhalb kurzer Zeit einen Wert annimmt, der etwa auf der zu diesem Zeitpunkt vom Sensor (1) abgegebenen Ausgangsspannung liegt.

6. Einrichtung nach einem der vorhergehenden Ansprüche, dadurch gekennzeichnet, daß ein Mikrocomputer (5) mit einem Programm vorgesehen ist, das regelmäßig sowohl den Sensor (1) als auch den Schalter (6) abfragt, bei Überschreiten des Schwellwertes und bei Betätigung des Schalters (6) den Scheibenwischer ein- oder ausschaltet und bei Betätigung des Schalters (6) den Schwellwert in Abhängigkeit vom aktuellen Sensorsignal anpaßt.

## Claims

1. A device for controlling a windscreen wiper, particularly on a motor vehicle, with a sensor (1), which indicates moisture on a screen, for the automatic control of the windscreen wiper and with an additional manually operable switch (6) for switching on the windscreen wiper, characterised in that the windscreen wiper is automatically switched on when the sensor (1) indicates a moisture level above a predetermined threshold value and that the threshold value is decreased on operating the switch (6).

2. A device according to claim 1, characterised in that when the switch (6) is operated the threshold value is decreased to about the output voltage delivered at this time by the sensor (1).

3. A device according to claim 1, characterised in that after the device is switched on the threshold value assumes a value which is equal to or somewhat less than the output voltage delivered by the sensor (1) at the time of switch-on.

4. A device according to any one of the preceding claims, characterised in that when the device is switched on after an extended time the threshold value assumes the value of the last existing stored threshold value.

5. A device according to any one of claims 1, 2 or 3, characterised in that when the device is switched on again within a short time the threshold value assumes a value which approximates to the output voltage delivered by the sensor (1) at this time.

6. A device according to any one of the preceding claims, characterised in that a microcomputer (5) is provided, with a program which regularly interrogates both the sensor (1) and the switch (6), switches on or switches off the windscreen wiper when the threshold value is exceeded and when the switch (6) is operated, and adapts the threshold value in accordance with the current sensor signal when the switch (6) is operated.

## Revendications

1. Installation de commande d'un essuie-glace, équipant notamment un véhicule automobile, comprenant un capteur (1) indiquant l'humidité présente sur une vitre, en vue de la commande automatique de l'essuie-glace, et un commutateur supplémentaire (6) actionnable à la main, en vue de l'enclenchement de l'essuie-glace, caractérisée par le fait que l'essuie-glace est enclenché automatiquement lorsque le capteur (1) indique une humidité excédant une valeur de seuil préétablie ; et par le fait que la valeur de seuil est diminuée lors d'un actionnement du commutateur (6).

2. Installation selon la revendication 1, caractérisée par le fait que, lors d'un actionnement du commutateur (6), la valeur de seuil est sensiblement ramenée à la tension de sortie délivrée par le capteur (1) à cet instant.

3. Installation selon la revendication 1, caractérisée par le fait que la valeur de seuil prend, après l'enclenchement de l'installation, une valeur égale ou légèrement inférieure à la tension de sortie délivrée par le capteur (1) à l'instant de l'enclenchement.

4. Installation selon l'une des revendications précédentes, caractérisée par le fait que la valeur de seuil prend, lors de l'enclenchement de l'installation après une durée prolongée, la valeur de seuil mémorisée présente en dernier lieu.

5. Installation selon l'une des revendications 1, 2 ou 3, caractérisée par le fait que, lors du réenclenchement de l'installation en un temps court, la valeur de seuil prend une valeur qui représente environ la tension de sortie délivrée à cet instant par le capteur (1).

6. Installation selon l'une des revendications précédentes, caractérisée par le fait qu'un micro-ordinateur (5) est doté d'un programme qui interroge régulièrement à la fois le capteur (1) et le commutateur (6), qui enclenche ou déclenche l'essuie-glace lors d'un dépassement de la valeur de seuil et lors d'un actionnement du commutateur (6), et qui, lors d'un actionnement du commutateur (6), adapte la valeur de seuil en fonction du signal alors délivré par le capteur.
